# EUROPEAN PATENT APPLICATION

(11) **EP 1 333 393 A1**
(43) Date of publication of application: **06.08.2003**
(21) Application number: 01904574.9
(22) Date of filing: 20.02.2001
(51) Int. Cl.: G06F 17/60, G07F 17/40

(54) **MERCHANDISE SALE SUPPORTING METHOD**

(30) Priority: 10.11.2000 JP 2000344085
(71) Applicant: Best Medical Service Kabushiki Gaisha, Saitama-shi, Saitama 330-0802 (JP)
(72) Inventor: SHINBO, Koichiro, c/o BEST MEDICAL SERVICE K G, Saitama-shi, Saitama 330-0802 (JP)
(74) Representative: Möbus, Steffen
(86) International application number: JP0101212
(87) International publication number: WO02039335

(57) **Abstract**

A merchandise sale support method mainly using the Internet (100), merchandise sale supporting means (eyeglasses sale supporting means) (10) managed by an eyeglasses seller (merchandise seller), merchandise making means managed by eyeglasses makers (merchandise makers, merchandise suppliers) (201, 202,..., 20n), and merchandise selling means (eyeglasses selling means) (301, 302,..., 30n) installed in selling places. While replying the inquiry about eyeglasses of a user according to the results of optometry and the characteristics of an eyeglasses frame and a lens adaptive to information unique to the user, optimum eyeglasses conditions are selected, thus providing a merchandise sale support method in which an eyeglasses maker best meeting the conditions is instructed to make eyeglasses through a network.

## Description

### BACKGROUND OF THE INVENTION

### Field of the Invention:

This invention relates to a merchandise sales support method, and more particularly to a merchandise sales support method for merchandise corresponding to each user.

### Description of the Related Art:

In regards to a system of manufacturing eyewear, an eyewear frame manufacturing system has been disclosed in Japanese Patent H5-172545. This is a technique of manufacturing eyewear frames that first, combines three-dimensional face shape data of an examinee's face with desired eyewear-frame data that is selected from an eyewear-frame database having dimension data and displays an image of the examinee wearing the selected eyewear frames, then obtains eyewear-frame cutting and adjustment data for fitting the examinee' s face with the most suitable eyewear frames, and manufactures the eyewear frames.

Also, in Japanese Patent H11-167589, a system for selling eyewear is disclosed that comprises: an eyewear-auto-selection unit that combines selected eyewear frames and lenses with an image of the user obtained from an image means and displays an image of the user's face wearing the eyewear on a display, then creates data for manufacturing the eyewear based on the eyewear frames and lenses selected by the user and on results from the eye-examination unit; and a manufacturing section that manufactures the eyewear based on the data for manufacturing the eyewear that was sent over communications lines.

However, in these techniques for manufacturing eyewear frames, it was necessary to select lenses separately in order to provide the user's desired eyewear.

The eyewear-sales system, comprising an eyewear-auto-selection unit and eyewear-manufacturing section, is a simplified chain sales system that sends data for manufacturing the eyewear and the input eye-examination results to the manufacturing section, and the manufacturing section manufactures the eyewear. In this sales system, the eyewear is selected based on answers to pre-prepared questions and eye-examination results, so it is difficult to select the most suitable eyewear based on special conditions for each user such as how the eyewear will be used, the material of the eyewear frames and lenses, the lens thickness, and the like, and to give advise to the user.

Also, there was a problem in that since the eyewear manufacturing section is limited, it was not always possible to select an eyewear manufacturer that can satisfy the optimum conditions, such as manufacturing cost or date of delivery, for the selected eyewear.

Taking the above problems into consideration, it is the object of this invention to provide a merchandise sales support method that answers questions from the user related to the eyewear and selects conditions for the most suitable eyewear based on the characteristics of eyewear frames and lenses corresponding to eye-examination results and information unique to each individual user, and sends an instruction via a network to an eyewear manufacturer having the best conditions to manufacture the eyewear.

### SUMMARY OF THE INVENTION

The invention according to claim 1 is a merchandise sales support method for selling merchandise that corresponds to each user in which a merchandise-sales-support means operated by a merchandise seller comprises: a first step that receives data related to the user, which includes measurement results such as vision or body type and conditions of use such as how the merchandise will be used by the user, via a network, such as the Internet, from a merchandise-sales means installed at a sales location for the merchandise; a second step that selects the most suitable merchandise based on the user data from a database related to registered merchandise; and a third step that selects the most suitable merchandise supplier from among merchandise suppliers, including pre-registered merchandise manufacturers, and sends the most suitable merchandise data from the merchandise-sales-support means to the merchandise-manufacturing means or terminal of the selected merchandise supplier over the network, and gives instructions to supply the merchandise.

The invention according to claim 2 is the merchandise sales support method of claim 1 in which the first step comprises a step that receives questions related to the merchandise from the user when the merchandise-sales-support means receives the user data, and sends answers to the questions and advice to the user.

The invention according to claim 3 is the merchandise sales support method of claim 1 or claim 2 in which the third step comprises a step that sends data, which is related to the most suitable merchandise, and an estimate request to a plurality of merchandise suppliers; selects the most suitable merchandise supplier based on estimate conditions sent from the merchandise suppliers, which include merchandise price and delivery date; and instructs the selected most suitable merchandise supplier to supply the merchandise.

The invention according to claim 4 is the merchandise sales support method of any of the claims 1 to 3 in which the second step comprises: a fourth step that selects lenses and frames for the eyewear from a database based on the user data, which includes conditions of use and user preferences such as color and design of the eyewear, a database, which contains characteristics of the lenses and frames for the eyewear, and measurement results of eye examination data such as vision, and face data that uses 3-dimensional image technology, and combines them as the eyewear or merchandise; and a fifth step that sends a synthesized image of the user, wearing the eyewear using the face data and combined lenses and frames for the eyewear, to said merchandise-sales means via the network, and prompts the user to check the selection of the most suitable eyewear.

The invention according to claim 5 is the merchandise sales support method of any of the claims 1 to 4 in which the third step comprises: a step that selects a supplier of eyewear, which is the most suitable merchandise supplier, from among a plurality of merchandise suppliers that were pre-registered on a network server based on the lens characteristics and eyewear characteristics included in data related to the most suitable eyewear selected by the user, and the user preference data, and gives an instruction to supply the eyewear.

The invention according to claim 6 is the merchandise sales support method of any of the claims 1 to 5 in which the third step comprises: a step that instructs the eyewear supplier to deliver the eyewear to a specified delivery location.

The invention according to claim 7 is the merchandise sales support method of any of the claims 1 to 6 where, when merchandise sold to a pre-registered user has a set merchandise code that can be used to specify the merchandise on a normal sales network, and information of a second sales price is received from the user over a network, such as the Internet, of the merchandise on another pre-registered sales network that is lower than the first sales price at the time the merchandise was sold, the sales price charged to the user is changed from the first sales price to the second sales price, and billed to the user.

The invention according to claim 8 is the merchandise sales support method of any of the claims 1 to 7 where changing the sales price from the first sales price at the time the merchandise was sold to a second sales price according to information from the user is performed when the price is greater (higher) than a preset sales price.

The invention according to claim 9 is the merchandise sales support method of any of the claims 1 to 8 where changing the sales price from a first sales price at the time the merchandise was sold to a second sales price according to information from said user is performed within a preset period after the merchandise is ordered.

The invention according to claim 10 is the merchandise sales support method of any of the claims 1 to 9 where, when payment for merchandise from a user is finished, a refund is processed for the user that is equal to the difference in the first price at the time the merchandise was sold and second sales price according to information from the user.

The invention according to claim 11 is a memory means on which a program is recorded that is capable of executing the merchandise sales support method in any of the claims 1 to 10.

### BRIEF DESCRIPTION OF THE DRAWINGS

Fig. 1 is a drawing showing the construction of the merchandise sales support method of an embodiment of the invention.
Fig. 2 is a drawing showing the construction of the eyewear-sales means shown in Fig. 1.
Fig. 3 is a drawing showing the construction of the eyewear-sales-support means shown in Fig. 1
Fig. 4 is a flowchart showing the flow of the operation of the merchandise sales support method of an embodiment of the invention.
Fig. 5 is a flowchart showing one example of the operation of the merchandise-sales-support means shown in Fig. 3.

### DESCRITPION OF THE PREFERRED EMBODIMENTS

The preferred embodiments of the present invention are explained in detail based on the drawings.

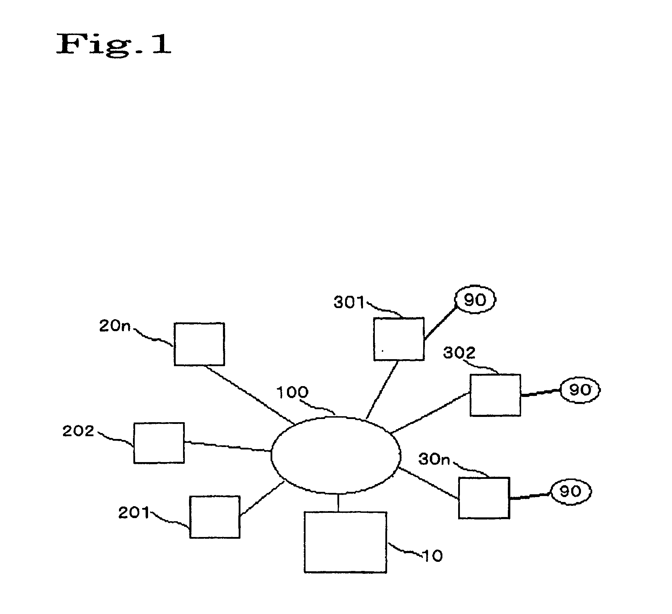

Fig. 1 is a drawing showing the construction of the merchandise sales support method of an embodiment of the invention.

As shown in Fig. 1, the construction of the merchandise sales support method of this embodiment comprises: the Internet 100, a merchandise-sales-support means 10 that is managed by an eyewear seller (merchandise seller), merchandise-manufacture means (eyewear-manufacture means, terminals) 201, 202, ..., 20n that are managed by respective eyewear manufacturers (merchandise manufacturers, merchandise suppliers), and merchandise-sales means (eyewear-sales means) 301, 302, ..., 30n that are set up at the eyewear shops.

The merchandise-sales-support means 10 receives data from the eyewear-sales means 301 (hereafter, eyewear-sales means 301 will be used as a representative) via the internet 100 related to the user 90 such as measurement results, which include eye-examination data such as vision of the user 90, and face data that uses 3-dimensional image technology, and conditions of use such as how the eyewear will be used.

Also, the merchandise-sales support means 10 selects data related to the most suitable eyewear (merchandise) for the user based on the data related to the user 90, and sends that data via the Internet 100 to the eyewear-manufacture means 201 (hereafter, eyewear-manufacture means 201 will be used as a representative), and gives an instruction to manufacture the eyewear. It can also give instructions of where to deliver the eyewear.

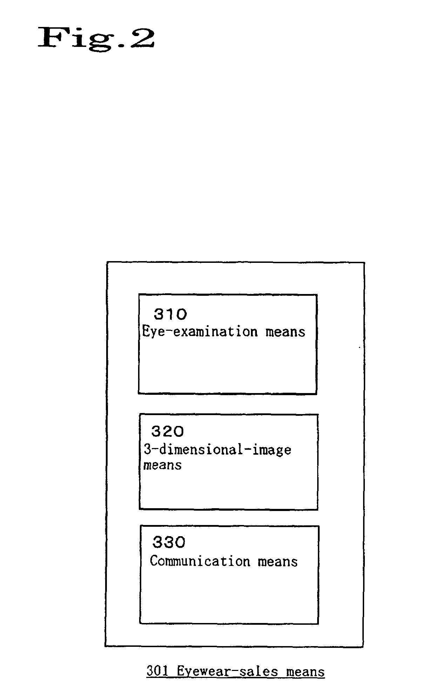

Fig. 2 is a drawing showing the construction of the eyewear-sales means 301 in Fig. 1.

The eyewear-sales means 301 comprises: an eye-examination means 310 for the user 90, a 3-dimensional-image means 320, and an interactive type communication means 330 for asking questions such as the conditions for use.

The communication means 330 can add to and update the contents of the questions stored in its database. For example, in addition to receiving selections corresponding to questions, it receives input such as questions from the user 90.

The eyewear-sales means 301 sends data to the merchandise-sales-support means 10 via the Internet 100 related to the user 90, which includes eye-examination data such as the vision of the user 90 from the eye-examination means 310, face data from the 3-dimensional-image means 320 and conditions of use such as how the eyewear will be used from the communication means 330.

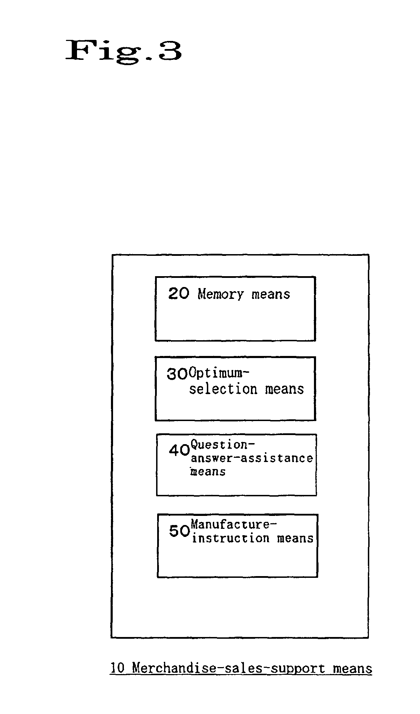

Fig. 3 is a drawing showing the construction of the merchandise-sales-support means 10 in Fig. 1.

The merchandise-sales-support means 10 comprises: a memory means 20, optimum-selection means 30, question-answer-assistance means 40, and manufacture-instruction means 50.

The memory means 20 stores a database related to eyewear lenses and frames, and a database related to the contents of the questions stored by the communication means 330 shown in Fig. 2.

The optimum-selection means 30 selects candidates for the most suitable eyewear from the database related to the eyewear registered in the memory means 20, based on face data and preferences of the user 90, such as color and design of the eyewear, that are included in the received data related to the user 90.

Also, the optimum-selection means 30 combines the face data with the selected eyewear and displays a synthesized image of the eyewear being worn by the user and prompts the user 90 to select the most suitable eyewear.

The method of selection is performed based on measurement results containing eye-examination data such as vision, conditions of use such as how the eyewear will be used, lens characteristics, and characteristics of the eyewear frames, and is narrowed down by conditions such as lens conditions such as material, specific weight, thickness, for example, lightweight plastic or hard, thick glass, and frame conditions such as material and specific gravity, for example, lightweight, anti-corrosive, and the like.

When the question-answer-assistance means 40 receives data related to the user 90, including questions from the user 90 that are entered by the communication means 330, that data is used for adding to or updating the database related to the question contents stored by the communication means 330 in the memory means 20. Also, when the technician operating the question-answer-assistance means 40 is capable of answering the questions, the answers and advice are sent in realtime to the communication means 330 and the user 90 is notified.

The manufacture-instruction means 50 sends the data related to the most suitable eyewear received from the merchandise-sales-support means 10 to the eyewear-manufacture means 201 (hereafter used as a representative eyewear-manufacture means) via the Internet 100, and instructs that the eyewear be manufactured.

Moreover, based on the preferences of the user 90 such as lens characteristics, eyewear frame characteristics, color, material, design and the like that are contained in the data related to the most suitable eyewear and that are selected by the user 90, the manufacture-instruction means 50 selects the most suitable manufacturer from among the eyewear manufacturers that manage the eyewear-manufacture means 201, 202, ..., 20n that are pre-registered on the server of the Internet 100, and instructs that the eyewear be manufactured.

Furthermore, the manufacture-instruction means 50 can send data related to the most suitable eyewear and an estimate request to a plurality of pre-registered eyewear manufacturers, and select the most suitable eyewear manufacturer based on estimate conditions that include the product cost and delivery date that are sent from the eyewear manufacturer, and then instruct the selected most suitable eyewear manufacturer to manufacture the eyewear.

Also, it is possible for the manufacture-instruction means 50 to send instructions to the eyewear manufacturer to deliver the manufactured eyewear to a specified location such as a specified place or specified person.

Next, the operation of the merchandise sales support method of this embodiment will be explained.

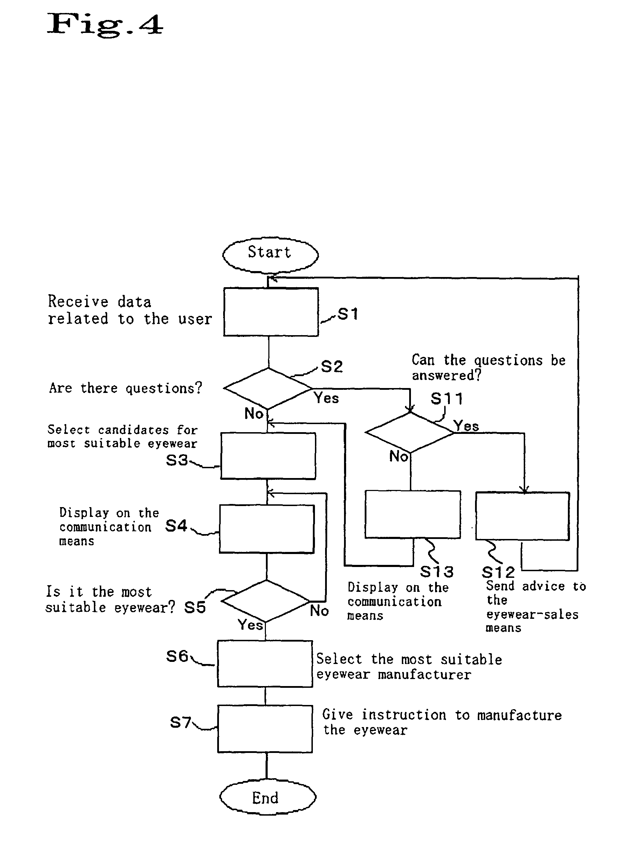

Fig. 4 is a flowchart showing the flow of the operation of the merchandise sales support method of this embodiment.

The eyewear-sales-support means 10 receives data from the eyewear-sales means 301 via the Internet 100 related to the user 90 such as eye-examination data, such as the vision of the user 90 obtained by the an eye-examination means 310, face data obtained by a 3-dimensional-image means 320, and conditions of use, such as how the eyewear will be used (step S1).

The question-answer-assistance means 40 determines whether or not there are any questions from the user 90, which were input using the communication means 330, that are contained in the received data related to the user 90 (step S2).

In step S2, when there are no questions from the user 90 (No in the figure), the optimum-selection means 30 selects candidates for the most suitable eyewear from a database stored in the memory means 20 related to the eyewear, based on face data contained in the received data related to the user 90, and preferences of the user 90 such as color and design of the eyewear (step S3).

The optimum-selection means 30 sends an image of the user wearing the eyewear, which is synthesized by combining the received face data and selected candidates for the most suitable eyewear, to the eyewear-sales means 301, and displays the image on the communication means 330 (step S4). This prompts the user 90 to select the most suitable eyewear.

The optimum-selection means 30 then determines whether the selection data received from the user 90 is the most suitable eyewear (step S5).

In step S5, when the data is the most suitable eyewear (Yes in the figure), the manufacture-instruction means 50 selects the most suitable eyewear manufacturer from among pre-registered eyewear manufacturers based on the material and design of the eyewear lenses and frames, and the like (step S6).

The manufacture-instruction means 50 then sends the data related to the selected eyewear via the Internet 100 to the eyewear-manufacture means 201 of the selected eyewear manufacturer, and gives an instruction to manufacture the eyewear (step S7).

The eyewear manufacturer delivers the completed eyewear to a specified delivery location (not shown in the figure).

In step S5, when the data is not for the most suitable eyewear (No in the figure), the process returns to step S4.

In step S2, when there are questions from the user 90 (Yes in the figure), the question-answer-assistance means 40 determines whether or not the questions can be answered (step S11).

In step S11, when the questions can be answered (Yes in the figure), the question-answer-assistance means 40 sends answers and advise to the eyewear-sales means 301 (step S12). Next, the process returns to step S1.

In step S11, when the questions cannot be answered (No in the figure), the question-answer-assistance means 40 sends a message to the eyewear sales means 301 that the answers and advice will be sent separately (at a later date), and displays the message by the communication means 330 (step S13). Next, the process advances to step S3.

Next, another example of another use of the merchandise-sales-support means 10 shown in Fig. 1 will be explained.

When a merchandise code is set for the merchandise that was sold to a pre-registered user 90 that makes it possible to specify the merchandise on a normal sales network, and information is received over a network such as the Internet 100 from the user 90 that a second sales price for merchandise on another pre-registered normal sales network is lower than a first sales price at the time the merchandise was ordered, the sales price is changed from the first sales price given to the user 90 to the second sales price.

Also, changing the price from the first sales price to the second sales price is performed when the sales price is greater than (higher than) a preset sales price.

Furthermore, changing the price from the first sales price to the second sales price is performed within a preset period after the merchandise is ordered.

The price billed to the user 90 for the merchandise is the changed sales price.

In the case that the user 90 has finished paying for the merchandise, it is possible to process a discount for the user 90 equal to the difference in the first sales price and second sales price.

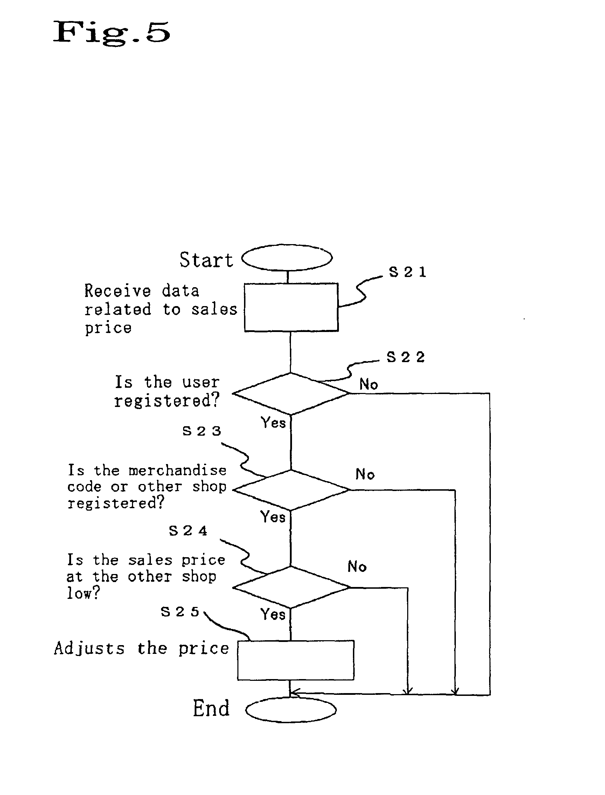

Fig. 5 is a flowchart showing an example of the operation of the merchandise-sales-support means 10 shown in Fig. 3.

In the case that merchandise code, which can specify merchandise on a normal sales network, is set for the merchandise sold to a pre-registered user 90, and sales price information is received from the user 90 of a second sales price on another pre-registered normal sales network that is lower than the first sales price at the time the merchandise was ordered, the sales price charged to the user 90 is changed from the first sales price to the second sales price.

The merchandise-sales-support means 10 receives information related to the merchandise code and sales price of the merchandise in question at another shop via the Internet 100 from the user that purchased the merchandise (step S21).

The merchandise-sales-support means 10 then determines whether or not the sender of the data is a registered user 90 (step S22).

In step S22 when the sender is a registered user 90 (Yes in the figure), the merchandise-sales-support means 10 determines whether or not the received merchandise code and other shop are registered (step S23).

In step S23, when the merchandise code and other shop are registered (Yes in the figure), the merchandise-sales support means 10 determines whether the sales price at the other shop (second sales price) is lower then the sales price given to the user 90 (first sales price) (step S24).

In step S24, when the sales price at the other shop is lower (Yes in the figure), price adjustment is performed to replace the price given to the user 90 with the sales price at the other shop (step S25).

In step S24, when the sales price at the other shop is not lower (No in the figure), processing ends.

In step S23, when either the received merchandise code or other sales shop is not registered (No in the figure), processing ends.

In step S22, when the user 90 is not registered (No in the figure), processing ends.

Also, changing the price from the first sales price to the second sales price is performed when the sales price is greater than (higher than) a preset sales price.

An invoice is sent to the user 90 according to the changed sales prices.

Furthermore, changing the price from the first sales price to the second sales price is performed within a preset period after the merchandise is ordered.

In the case that the user 90 has finished paying for the merchandise, it is possible to process a discount for the user 90 equal to the difference in the first sales price and second sales price.

When a merchandise code is set for the merchandise that was sold to a pre-registered user 90 that makes it possible to specify the merchandise on a normal sales network, and information is received over a network such as the Internet 100 from the user 90 that a second sales price for merchandise on another pre-registered normal sales network is lower than a first sales price at the time merchandise was ordered, the sales price is changed from the first sales price given to the user 90 to the second sales price.

Also, changing the price from the first sales price to the second sales price is performed when the sales price is greater than (higher than) a preset sales price.

Furthermore, changing the price from the first sales price to the second sales price is performed within a preset period after the merchandise is ordered.

In the case that the user 90 has finished paying for the merchandise, it is possible to process a discount for the user 90 equal to the difference in the first sales price and second sales price.

The merchandise sales support method of this embodiment is constructed as described above, so it has the following.

By giving answers to questions from the user 90 and providing advise after receiving data related to the user 90, which includes eye-examination data such as the vision of the user 90, face data, and conditions of use such as how the eyewear will be used, it is possible for the user 90 to satisfactorily select the most suitable eyewear.

By selecting the most suitable eyewear manufacturer from among pre-registered eyewear manufacturers, sending data related to the selected eyewear via the Internet 100 and giving instructions (request) to manufacture the eyewear, it is possible to ask an eyewear manufacturer, which was determined to be the most suitable according to their record, to manufacture the eyewear. It is also possible to do away with space for manufacturing. Also, by sending an estimate request, it is possible to provide the most suitable eyewear from the aspect of delivery date and cost to the user 90.

In the merchandise sales support method of this embodiment, the manufacture-instruction means 50 sends an instruction to the merchandise-manufacture means 201 of the merchandise manufacturer to manufacture the merchandise, however, it is also possible for a supply-instruction means 50 to send an instruction to the terminal 201 of a merchandise supplier, such as a distributor, to supply the merchandise.

The merchandise that is the object of the merchandise-sales means 301 of the merchandise sales support method of this embodiment is not limited to eyewear, and the embodiment can be applied as well to other accessories such as clothing, hats, shoes, rings and the like. There is no need for an in-shop specialist or technician at the sales location where the merchandise-sales means 301 is set up, so use at stores such as convenience stores is also possible.

Moreover, the invention is not limited to this embodiment, and can be applied to suitable technology related to this merchandise sales support method.

Furthermore, the number, location and shape of the above components are not limited by this embodiment, and any number, location or shape that is suitable to the invention is possible. In the drawings, the same code numbers are used for identical elements.

### Industrial Applicability

With this invention constructed as described above, by giving answers to questions from the user and providing advise after receiving data related to the user, which includes eye-examination data such as the vision of the user, face data, and conditions of use such as how the eyewear will be used, it is possible for the user to satisfactorily select the most suitable eyewear.

Also, by using the Internet, it is possible to select an eyewear supplier from among a plurality of eyewear suppliers, including eyewear manufacturers, that is the most suitable from the aspect of technology, cost and delivery date.

By taking into consideration delivery date and cost, it is possible to select the most suitable merchandise manufacturer from among pre-registered merchandise manufacturers, and to instruct (request) that the merchandise be manufactured.

Not only is it possible to send an instruction to the eyewear manufacture to manufacture the most suitable eyewear, but it is also possible to send an instruction to an eyewear supplier, such as a distributor, to supply the most suitable eyewear.

It is possible to deliver the most suitable eyewear to a location specified by the user.

By receiving a request to correct the sales price of merchandise already purchased and adjusting the sales price when a user finds that the merchandise is being sold more cheaply at another pre-registered shop, it is possible to prevent losing users.

Since discounts are adjusted when the sale price is greater than (higher than) a preset sales price, it is possible to stop the sales price from becoming too low.

By adjusting the sales price within a preset period after merchandise has been ordered, it is possible to limit the period for receiving price adjustments.

In the case that the merchandise has already been paid for, it is possible to adjust the price by refunding money to the user equal to the difference between the first sales price and second sales price.

## Claims

1. A merchandise sales support method for selling merchandise that corresponds to each user wherein;
a merchandise-sales-support means operated by a merchandise seller comprises:
a first step that receives data related to the user, which includes measurement results such as vision or body type and conditions of use such as how the merchandise will be used by the user, via a network, such as the Internet, from a merchandise-sales means installed at a sales location for the merchandise;
a second step that selects the most suitable merchandise based on said user data from a database related to registered merchandise; and
a third step that selects the most suitable merchandise supplier from among merchandise suppliers, including pre-registered merchandise manufacturers, and sends said most suitable merchandise data from said merchandise-sales-support means to the merchandise-manufacturing means or terminal of said selected merchandise supplier over said network, and gives instructions to supply said merchandise.

2. The merchandise sales support method of claim 1 wherein said first step comprises a step that receives questions related to said merchandise from said user when said merchandise-sales-support means receives said user data, and sends answers to said questions and advice to said user.

3. The merchandise sales support method of claim 1 or claim 2 wherein said third step comprises a step that sends data, which is related to the most suitable merchandise, and an estimate request to a plurality of merchandise suppliers; selects the most suitable merchandise supplier based on estimate conditions sent from said merchandise suppliers, which include merchandise price and delivery date; and instructs the selected most suitable merchandise supplier to supply said merchandise.

4. The merchandise sales support method of any of the claims 1 to 3 wherein said second step comprises:
a fourth step that selects lenses and frames for the eyewear from a database based on said user data, which includes conditions of use and user preferences such as color and design of the eyewear, a database, which contains characteristics of the lenses and frames for the eyewear, and measurement results of eye examination data such as vision, and face data that uses 3-dimensional image technology, and combines them as the eyewear or merchandise; and a
fifth step that sends a synthesized image of said user, wearing the eyewear using the face data and combined lenses and frames for the eyewear, to said merchandise-sales means via said network, and prompts said user to check the selection of the most suitable eyewear.

5. The merchandise sales support method of any of the claims 1 to 4 wherein the third step comprises:
a step that selects a supplier of eyewear, which is the most suitable merchandise supplier from among a plurality of merchandise suppliers that were pre-registered on said network server based on the lens characteristics and eyewear characteristics included in data related to the most suitable eyewear selected by said user, and said user preference data, and gives an instruction to supply said eyewear.

6. The merchandise sales support method of any of the claims 1 to 5 wherein the third step comprises:
a step that instructs said eyewear supplier to deliver said eyewear to a specified delivery location.

7. The merchandise sales support method of any of the claims 1 to 6 where when merchandise sold to a pre-registered user has a set merchandise code that can be used to specify said merchandise on a normal sales network, and information of a second sales price is received from said user over a network such as the Internet of said merchandise on another pre-registered sales network that is lower than the first sales price at the time the merchandise was sold, the sales price charged to said user is changed from said first sales price to said second sales price, and billed to said user.

8. The merchandise sales support method of any of the claims I to 7 where changing the sales price from the first sales price at the time the merchandise was sold to a second sales price according to information from said user is performed when the price is greater (higher) than a preset sales price.

9. The merchandise sales support method of any of the claims 1 to 8 where changing the sales price from a first sales price at the time the merchandise was sold to a second sales price according to information from said user is performed within a preset period after the merchandise is ordered.

10. The merchandise sales support method of any of the claims 1 to 9 where when payment for merchandise from a user is finished, a refund is processed for said user that is equal to the difference in the first price at time the merchandise was sold and second sales price according to information from said user.

11. A memory means on which a program is recorded that is capable of executing the merchandise sales support method in any of the claims 1 to 10.
